Europäisches Patentamt

European Patent Office

Office européen des brevets

(19)

(11) Veröffentlichungsnummer: **0 182 321 B1**

(12) **EUROPÄISCHE PATENTSCHRIFT**

(45) Veröffentlichungstag der Patentschrift: 05.06.91

(21) Anmeldenummer: 85114576.3

(22) Anmeldetag: 16.11.85

(51) Int. Cl.⁵ **G01N 30/02**, G01N 30 08, G01N 30/96, G01N 30 34

(54) **Verfahren und Vorrichtung zur chromatographischen Bestimmung von Komponenten flüssiger Proben.**

(30) Priorität: **19.11.84 DE 3442227**

(43) Veröffentlichungstag der Anmeldung:
**28.05.86 Patentblatt 86/22**

(45) Bekanntmachung des Hinweises auf die
Patenterteilung:
**05.06.91 Patentblatt 91/23**

(84) Benannte Vertragsstaaten:
**CH DE FR GB LI NL**

(56) Entgegenhaltungen:
**EP-A- 0 073 940**  **EP-A- 0 103 082**
**EP-A- 0 115 672**  **AU-B- 500 209**
**DE-A- 2 612 609**  **DE-A- 2 717 433**
**DE-A- 2 914 807**  **FR-A- 2 529 290**
**GB-A- 2 039 091**  **US-A- 3 923 460**
**US-A- 4 128 476**  **US-A- 4 281 687**
**US-A- 4 290 775**  **US-A- 4 313 464**
**US-A- 4 387 075**

(73) Patentinhaber: **Forschungszentrum Jülich
GmbH
Postfach 1913
W-5170 Jülich(DE)**

(72) Erfinder: **Müller, Klaus P.
Krokusweg 9
W-5170 Jülich(DE)**

## Beschreibung

Die Erfindung bezieht sich auf ein Verfahren zur Bestimmung der Konzentration von Komponenten einer flüssigen Probe durch Chromatographie, insb. von geringen Ionenkonzentration in wäßrigen Proben durch Ionenchromatorgraphie, mit einem (wäßrigen) Eluenten angemessener Konzentration, ggf. unter Voranreicherung an einem Adsorber, sowie auf eine Vorrichtung zur Durchführung des Verfahrens.

Wäßrige Proben, insbesondere solche, wie man sie aus der Umwelt erhält, wie etwa atmosphärische Kondensate, Eisbohrkerne aus Gletschern oder Hagelkörner, enthalten Spurenmengen von ionischen Verunreinigungen, deren Nachweis zur Erfassung des Istzustandes sowie von Veränderungen außerordentlich wichtig ist.

Größenordnungsmäßig können solche Spurenverunreinigungen im ppb-Bereich vorliegen, so daß die Empfindlichkeit der Analysengeräte hoch sein muß. Kommerzielle Geräte haben ihre Nachweisgrenze im allgemeinen bei etwa 100 ppb.

Für die Flüssigkeitschromatographie sind unterschiedliche Anordnungen bekannt, bei denen durch Vorsäulen eine Anreicherung oder Mischwirkung oder durch mehrere Säulen eine Fraktionierung oder auch durch Vorbehandlung der Säulen insgesamt eine Empfindlichkeitssteigerung oder eine verbesserte Trennung erreicht werden soll (DE-OS 29 14 807 bzw. US-PSen 4 387 075 und 4 290 775).

Gemäß der AU-B-75551/74 werden Spurenverunreinigungen in Wasser (das in größeren Mengen vorliegt) mittels einer Kombination von Kationenaustauscher- und Anionenaustauschersäulen bestimmt, die in Reihe oder parallel geschaltet vorgesehen werden.

In der US-PS 3 923 460 wird schließlich eine nachge-schaltete Reinigung des Effluenten in Harzsäulen beschrieben, der dann erneut als Elutionsmittel verwendet wird.

Keine dieser Anordnungen ist für die sehr empfindliche Analyse von Verunreinigungen in sehr kleinen Wasserproben geeignet, bei der möglichst scharfe Peaks und ein geringer Untergrund angestrebt werden.

Ziel der Erfindung ist daher, die Empfindlichkeit solcher Geräte insbesondere für die Analyse kleiner Pobenmengen zu verbessern.

Das zu diesem Zweck entwickelte erfindungsgemäße Verfahren ist dadurch gekennzeichnet, daß man höher konzentrierten Eluenten mit der entsprechenden Menge Reinstlösungsmittel, insb. Reinstwassermenge zur Erzielung der angemessenen Konzentration vor der Trennsäule des (Ionen)chromatographen mischt, wobei die (wäßrige) Probelösung dem Reinstlösungsmittel- insb. dem Reinstwasserstrom beigegeben wird oder die in der Probelösung enthaltenen Ionen vorab an einem vom höher konzentrierten Eluenten eluierten Adsorber fixiert werden.

Auf diese Weise wird bei wäßrigen Proben der durch den Wassergehalt der Proben bedingte, die Bestimmung der schnell wandernden Ionen beeinträchtigende Leitfähigkeitsabfall durch den Wassergehalt der Proben zum Verschwinden gebracht und bei zusätzlicher Vorabfixierung eine Empfindlichkeitssteigerung durch schmäler werdende Peaks erreicht. Die nachfolgende Beschreibung bezieht sich weitgehend auf die ionenchromatographische Bestimmung geringer Ionenkonzentrationen in wäßrigen Proben, jedoch kann die Erfindung selbstverständlich allgemeiner für irgendeine chromatographische Trennung von in irgendeinem Lösungsmittel (z.B. Äthanol oder Alkan) enthaltenen Komponenten (in geringen oder höheren Konzentrationen, ionisch oder nichtionisch) z. B. durch HPLC odgl. angewandt werden. Ferner können die flüssigen Proben auch ursprünglich fest sein.

Vorzugsweise werden für die Vorabfixierung der im Probenwasser enthaltenen Ionen zwei kleine Voranreicherungssäulen verwendet, die zwischen der Probenaufgabe und der Trennsäule angeordnet sind und alternierend mit Richtungsumkehr in den Reinstwasserstrom bzw. den Strom des höher konzentrierten Eluenten eingeschaltet werden. Dabei werden die von der Probe stammenden Ionen aus dem Reinstwasserstrom an der Voranreicherungssäule fixiert und im nächsten Zyklus vom höher konzentrierten Eluenten mitgenommen.

Besonders zweckmäßig ist die Vorschaltung einer zusätzlichen Reinigungssäule, insbesondere in den Reinstwasserstrom. Vorzugsweise werden jedoch sowohl in den Zustrom des höher konzentrierten Eluenten als auch in den Reinstwasserzustrom je eine Reinigungssäule eingeschaltet, die alternierend umgeschaltet werden. Durch die Reinigungssäule werden aus dem Reinstwasserstrom zusätzlich vorab Verunreinigungen festgehalten, die beim Umschalten vom höher konzentrierten Eluenten in einem Schub mitgenommen werden, so daß nach dieser Zwischenphase besonders saubere Bedingungen für die nachfolgenden Analysen eingehalten werden können.

Die Erfindung umfaßt ferner eine Vorrichtung zur Durchführung des Verfahrens in ihren Varianten, wie aus der nachfolgenden Beschreibung anhand der beigefügten Zeichnungen hervorgeht; es zeigen schematisch:

Figur 1    eine Vorrichtung zur Durchführung des Verfahrens mit Reinigungssäulen und Pulsationsdämpfung, aber ohne Voranreicherungssäulen;

Figur 2    eine Vorrichtung mit Voranreicherungssäulen;

Figur 3    die Anordnung einer Dämpfungs-
           membran für die Pulsationsdämp-
           fung

Figur 4    Chromatogramme von Proben mit
           unterschiedlichem Verunreinigungsgehalt und

Figur 5    ein Chromatogramm, das mit einem
           herkömmlichen System aufgenommen wurde.

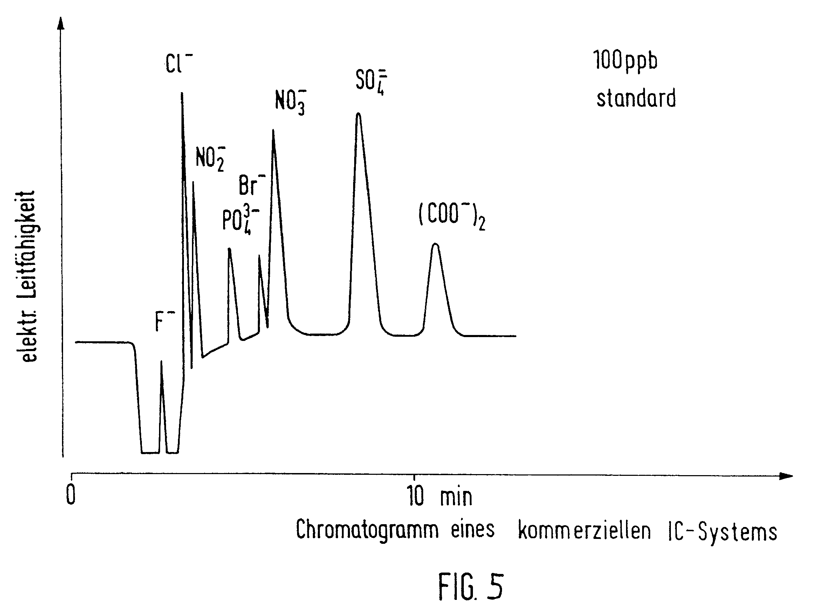

Zur Erläuterung der Erfindung wird zunächst auf Figur 5 Bezug genommen, die den Verlauf der Leitfähigkeit der aus der Trennsäule des Chromatographen austretenden Flüssigkeit bei herkömmlicher Arbeitsweise wiedergibt. Wie man sieht, wird zu Beginn des Chromatogramms ein starker Einbruch der Leitfähigkeit beobachtet. Dieser rührt von der geringen Leitfähigkeit des Wassers der Probe her, die normalerweise in den Eluentenstrom eingegeben wird.

Erfindungsgemäß wird nun dieser Einbruch dadurch verhindert, daß zur Säule aufkonzentrierter Eluent geleitet wird, der unmittelbar vor der Säule auf die gewünschte Konzentration mit Reinstwasser verdünnt wird, dem die Probe beigegeben wird. In dieser Form tritt dann das Wasser der Probe selbst nicht mehr störend in Erscheinung.

Das in Fig. 5 für Anionen gezeigte Chromatogramm kann selbstverständlich auch mit entsprechender Säulenfüllung und Elutionsmittel für Kationen aufgenommen werden.

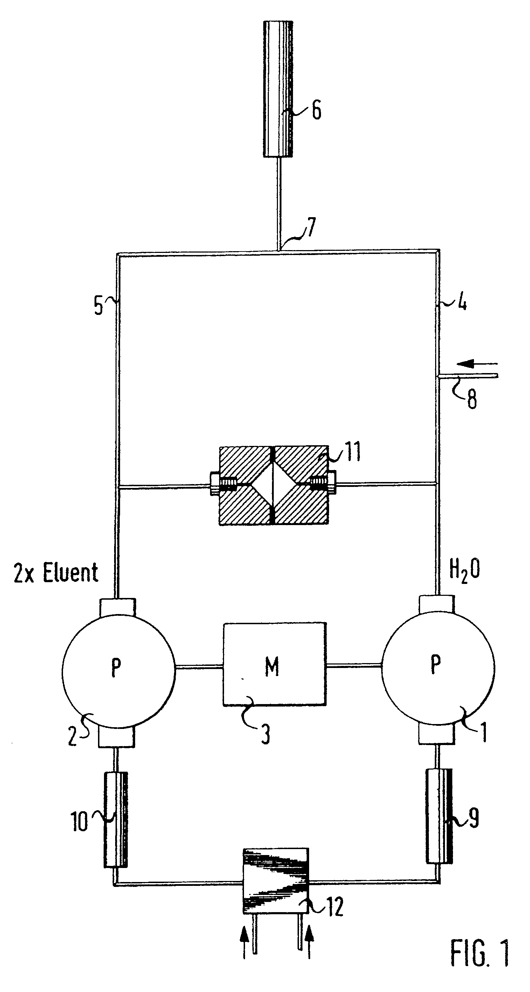

Ein Schema für eine Vorrichtung zur Durchführung des erfindungsgemäßen Verfahrens ist in Fig. 1 wiedergegeben: über die Pumpenköpfe 1 und 2 einer vom Motor 3 angetriebenen Pumpe werden Reinstwasser über die Leitung 4 und doppelt konzentrierter Eluent über die Leitung 5 zur Trennsäule 6 geleitet und bei 7 miteinander vermischt. In die Reinstwasserleitung wird bei 8 die wäßrige Analysenprobe eingegeben.

Bei dieser symmetrischen Anordnung, bei der gleiche Mengen Eluent und Reinstwasser gefördert werden, ist der Eluent doppelt konzentriert. Selbstverständlich könnten jedoch auch andere Mischungsverhältnisse und Aufkonzentrationen gewählt werden.

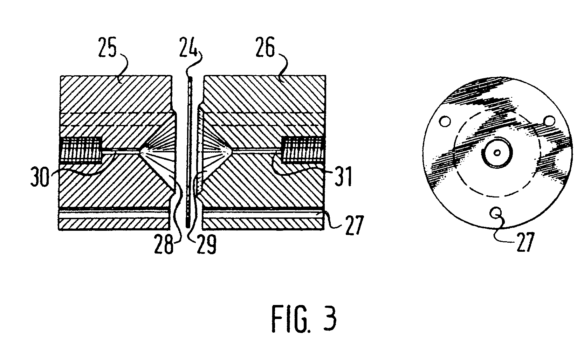

Vorzugsweise sind in den zur Pumpe führenden Leitungen für Reinstwasser und aufkonzentrierten Eluenten Reinigungssäulen 9 und 10 eingeschaltet, und als Pulsationsdämpfung dient eine zwischen die Leitungen 4 und 5 eingeschaltete Membrananordnung 11, die in Fig. 3 näher dargestellt ist.

Bei dieser völlig symmetrisch gebauten Anordnung können beide Zweige (Reinstwasserzweig und Eluentenzweig) miteinander vertauscht werden, wofür ein Umschalter 12 vorgesehen ist.

Durch die vorstehend beschriebene Mischung von aufkonzentriertem Eluenten mit Wasser wird im Chromatogramm eine Verbreiterung der "peaks" beobachtet.

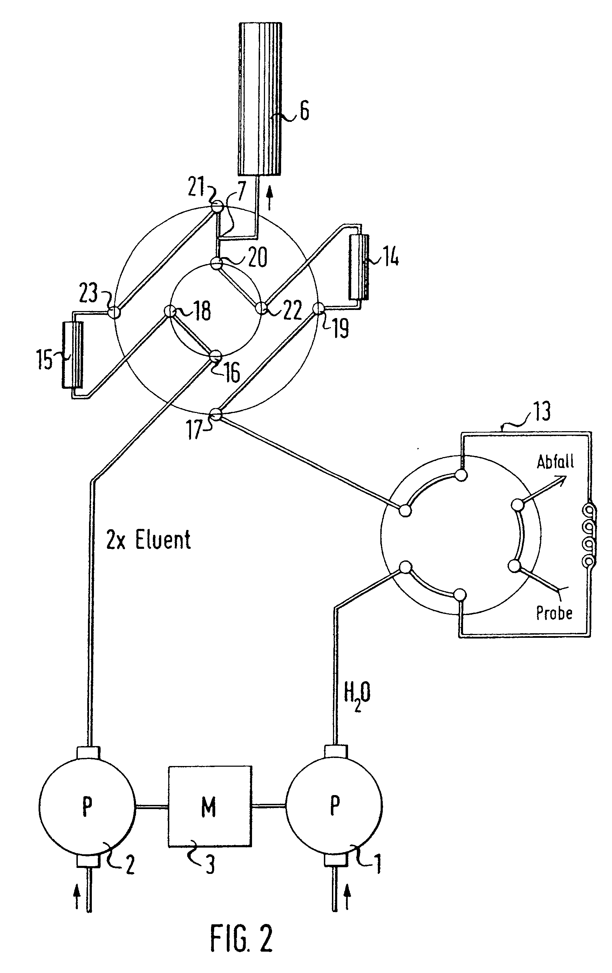

Diese läßt sich gemäß einer Weiterentwicklung der Erfindung vermeiden und zusätzlich eine weitere Steigerung der Empfindlichkeit erreichen, indem man eine Vorabfixierung der Ionen vorsieht, insbesondere mit der in Fig. 2 schematisch dargestellten Vorrichtung, bei der vor der Trennsäule 6 ein Anreicherungssäulenpaar und ein Vierwegventil angeordnet sind.

Beim Betrieb dieser in Fig. 2 gezeigten Vorrichtung wird in der gezeigten Stellung eine über die Probenaufgabeeinrichtung 13 zugeführte Probe (etwa 10 - 1000 $\mu$l) vom Reinstwasserstrom zur Säule 14 mitgenommen und dort festgehalten. Der Reinstwasserstrom geht weiter zum Mischpunkt 7, an dem er mit dem Eluenten gemischt wird, der über die Säule 15 fließt. Dabei nimmt er die vom vorangehenden Zyklus stammende, in der Säule 15 angereicherte Probe mit.

Die Säulen 14 und 15 sind gleich beschaffen, so daß die eine jeweils als Druckausgleich für die andere in dem gezeigten Kreis wirkt. Auf diese Weise werden keine unterschiedlichen Druckabfälle in beiden Leitungen (für Reinstwasser und für Eluenten) erzeugt.

Die Voranreicherungssäulen 14, 15 sind möglichst klein (< 10 cm³) und haben z.B. eine Trennbettlänge von 3 cm bei einer lichten Weite von 4 mm.

Die Doppelsäulenanordnung ist besonders bevorzugt, aber nicht zwingend. In einer abgewandelten Schaltung könnte auch mit einer einzigen Voranreicherungssäule gearbeitet werden.

Bei der in Fig. 2 dargestellten Anordnung wird nach Beendigung der Analyse des vom doppelt konzentrierten Eluenten in einem Schub aus der Anreicherungssäule 15 mitgenommenen Probematerials umgeschaltet, so daß im nächsten Zyklus die Säule 15 in den Reinstwasserkreis mit Probeaufgabeeinrichtung 13 gebracht wird, während die Anreicherungssäule 14 dann in den Eluentenzweig kommt. Nach dem Umschalten sind dann die Punkte 17 - 23, 19 - 21, 16 - 22 und 18 - 20 miteinander verbunden, und die Säulen 14 und 15 werden jeweils in umgekehrter Richtung durchströmt.

In der Zuleitung des aufkonzentrierten Eluenten sowie des Reinstwassers sind vorzugsweise wie bei der Anordnung gemäß Fig. 1 vor der Pumpe je eine Reinigungssäule (9, 10) eingeschaltet, die mit einen starken Ionenaustauscher gefüllt ist. Benutzt wurde Lewatit[R] (der Fa. Merck). Ebenso ist auch hier wiederum eine Pulsationsdämpfung (wie 11 in Fig. 1) zweckmäßig.

Als Eluent dient beispielsweise eine Carbonat Hydrogencarbonatlösung für die Elution von Anionen aus einer Anionenaustauschersäule mit schwachem, quervernetztem Ionenaustauscher.

Analog wäre auch eine Bestimmung von Kationen mit einem Kationenaustauscher durchführbar, wobei dann verdünnte Salpetersäure als Eluent dient.

Die Trennsäulen 6 wurden bei Drucken zwischen 40 und 60 bar betrieben. Benutzt wurden Säulen der Fa. Dionex. Die praktisch symmetrischen Leitungswege im Vierwegventil und die gleichen Voranreicherungssäulen bringen identische Druckverhältnisse in beiden Leitungswegen. Bei der symmetrischen Anordnung kompensieren sich auch die jeweils in den Verbindungsleitungen enthaltenen Restflüssigkeiten der einen bzw. anderen Phase. Im übrigen werden diese Verbindungsleitungen kurz gewählt.

Mit der erfindungsgemäßen Anordnung werden die früheluierten Ionen, wie Fluorid, Chlorid und Nitrit selbst bis herab zu 0,1 ppb bereits mit der einfachen Anordnung gemäß Fig. 1 bestimmt. Durch die in Fig. 2 gezeigte Anordnung erreicht man für alle Ionen eine Steigerung der Empfindlichkeit bis auf 0,01 ppb (Analysendauer 10 Minuten).

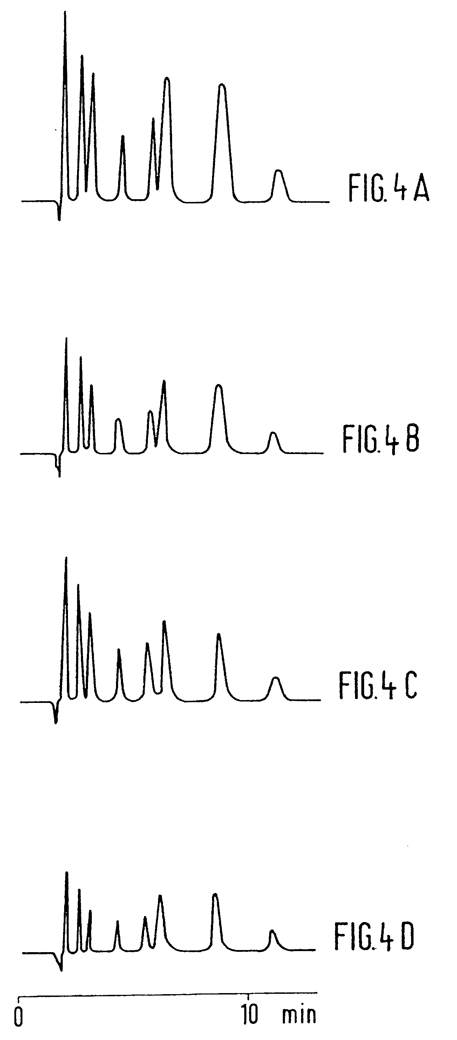

Fig. 4 zeigt vier Anionenchromatogramme von Proben mit unterschiedlichen Probengehalten, und zwar waren bei a und b 100 ppb bzw. 10 ppb Anionen in 10 $\mu$l Probevolumen enthalten und bei c und d 1 ppb bzw. 0,1 ppb in jeweils 500 $\mu$l Probevolumen. Die Detektorenemofindlichkeit betrug bei a und c 3 $\mu$S und bei b und d 1 $\mu$S.

Die für die Pulsationsdämpfung in Fig. 1 angedeutete Membran ist in Fig. 3 näher dargestellt: Eine Teflonmembran 24 von z.B. 0,3 mm Dicke ist zwischen zwei Anschlußstücken 25, 26 eingespannt, die durch in die Bohrungen 27 eingesetzte Schraubenbolzen zusammengehalten werden. Die Anschlußstücke 25, 26 bilden zur Membran hin Ausgleichsvolumina 28, 29 vom etwa 1,5- bis 2fachen des Pumpenhubs je Seite (z.B. 100 $\mu$l). die über Kapillarleitungen 30, 31 mit den Leitungen 4 bzw. 5 in Verbindung stehen. Die Membran 24 muß keine großen Drucke aushalten, da sie nur die kleinen Druckdifferenzen (ca. 1 - 2 bar) zwischen den beiden Hubräumen der Doppelkolbenpumpe auszugleichen hat. Ihre Größe und Dicke richtet sich nach der zu leistenden Ausgleichsarbeit.

Die erfindungsgemäß vorgesehene Dämpfungsmembran mit kleinem Ausgleichsvolumen führt insbesondere bei der erfindunggsgemäßen Förderung unterschiedlicher zu messender Bestandteile zu einer gleichbleibenden Konzentration der aus den geförderten Bestandteilen erzeugten Mischung.

## Ansprüche

1. Verfahren zur Bestimmung der Konzentration von Komponenten einer flüssigen Probe durch Chromatographie, insbesondere von geringen Ionenkonzentrationen in wäßrigen Proben durch Ionenchromatographie, mit einem wäßrigen Eluenten angemessener Konzentration, ggf. unter Voranreicherung an einem Adsorber, **dadurch gekennzeichnet,** daß man höher konzentrierten Eluenten mit der entsprechenden Menge Reinstlösungsmittel, insbesondere Reinstwassermenge, zur Erzielung der angemessenen Konzentration vor der Trennsäule des (Ionen)-chromatorgraphen mischt, wobei die (wäßrige) Probelösung dem Reinstlösungsmittel-insbesondere Reinstwasserstrom beigegeben wird oder die in der Probelösung enthaltenen Ionen vorab an einem vom höher konzentrierten Eluenten eluierten Adsorber fixiert werden.

2. Verfahren nach Anspruch 1, **dadurch gekennzeichnet,** daß man zur Vorabfixierung der Ionen zwei kleine Voranreicherungssäulen, insbesondere mit gleicher Füllung wie die Trennsäule, verwendet, die von Analysenzyklus zu Analysenzyklus alternierend in inverser Richtung durchströmt werden, wobei jeweils die in einem Zyklus aus dem Reinstlösungsmittel - insb. Reinstwasserstrom - an einer Säule fixierten Ionen im nächsten Zyklus vom höher konzentrierten Eluenten zum Mischpunkt vor der Trennsäule mitgenommen werden.

3. Verfahren nach Anspruch 1 oder 2, **dadurch gekennzeichnet,** daß man sowohl das Reinstlösungsmittel als auch den entsprechend konzentrierten Eluenten über je eine vorgeschaltete Reinigungssäule schickt.

4. Vorrichtung zur Durchführung des Verfahrens nach Anspruch 1 mit einer Trennsäule mit anschließendem Detektor, Einrichtungen zum geregelten Transport eines Eluenten und eine Anordnung zur Probeeingabe, **gekennzeichnet durch** eine auf konstanten Durchfluß geregelte zweiköpfige Aufgabenpumpe (1 - 3) für den Transport von höher konzentriertem Eluenten einerseites bzw. von den Eluenten ergänzendem Reinstlösungsmittel andererseits, die unmittelbar vor der Trennsäule (6) vereinigt werden, wobei im Reinstlösungsmittelweg (4) zur Trennsäule (6) eine Probeaufgabeeinrichtung (8 bzw. 13) vorgesehen ist.

5. Vorrichtung nach Anspruch 4, **gekennzeichnet durch** ein Voranreicherungssäulenpaar (14,15) vor der Trennsäule (6), aber hinter der Probenaufgabeeinrichtung (13) und Mittel zur alternierenden Einschaltung der Voranreicherungssäulen in den Eluenten- bzw. Reinstlösungsmittelstrom mit jeweiliger Richtungsumkehr.

6. Vorrichtung nach Anspruch 5,
   **gekennzeichnet durch**
   ein Vierwegventil (16 - 23) zur alternierenden Verbindung der Punkte 16 - 18, 20 - 22, 17 - 19, 21 - 23 bzw. 16 - 22, 20 - 18, 17 - 23, 21 - 19, wobei die Voranreicherungssäulen (14, 15) zwischen den Punkten 19 und 22 bzw. 18 und 23 angeordnet sind, während höher konzentrierter Eluent und Reinstlösungsmittelstrom zu den Punkten 16 und 17 zugeleitet werden und von den Punkten 20 und 21 über eine Zusammenführung (7) die Trennsäule (6) erreicht wird.

7. Vorrichtung nach einem der Ansprüche 4 bis 6,
   **dadurch gekennzeichnet,**
   daß in den Zuleitungen für Eluent und Reinstlösungsmittel, insb. -wasser, vor der Probenaufgabeeinrichtung je eine Reinigungssäule insb. mit starkem Ionenaustauscher vorgesehen ist.

8. Vorrichtung nach einem der Ansprüche 4 bis 7,
   **gekennzeichnet durch**
   eine Dämpfungsmembran (11) zwischen den von der zweiköpfigen Aufgabepumpe (1 - 3) abzweigenden Eluenten- und Reinstlösungsmittelströmen (4, 5).

**Claims**

1. Process for the determination of the concentration of components in a liquid sample by chromatography, in particular of low ionic concentrations in aqueous samples by ion chromatography, with an aqueous eluent of appropriate concentration, where appropriate with preconcentration on an adsorber, characterised in that more concentrated eluents are mixed with the appropriate amount of extra pure solvent, especially amount of extra pure water, to achieve the appropriate concentration upstream of the separation column of the (ion) chromatograph, where the (aqueous) sample solution is added to the extra pure solvent - in particular extra pure water - stream, or the ions contained in the sample solution are previously immobilised on an adsorber eluted by the more concentrated eluent.

2. Process according to Claim 1, characterised in that two small preconcentration columns, in particular with the same packing as the separation column, are used for the previous immobilisation of the ions and are subjected to flow alternately in the reverse direction from analysis cycle to analysis cycle, where, in each case, the ions immobilised on a column in one cycle from the extra pure solvent - especially extra pure water stream - are carried along in the next cycle by the more concentrated eluent to the mixing point upstream of the separation column.

3. Process according to Claim 1 or 2, characterised in that both the extra pure solvent and the correspondingly concentrated eluent are passed over an upstream purification column in each case.

4. Apparatus for carrying out the process according to Claim 1 with a separation column with subsequent detector, devices for the controlled transport of an eluent and an arrangement for sample input, characterised by a two-headed loading pump (1 - 3) controlled at a constant flow rate for transporting more concentrated eluent on the one hand, and extra pure solvent making up the eluent on the other hand, which are combined immediately upstream of the separation column (6), where a sample loading device (8 or 13) is provided in the extra pure solvent path (4) to the separation column (6).

5. Apparatus according to Claim 4, characterised by a pair of preconcentration columns (14, 15) upstream of the separation column (6) but downstream of the sample loading device (13) and means for alternate switching of the preconcentration columns into the eluent and extra pure solvent stream with reversal of direction in each case.

6. Apparatus according to Claim 5, characterised by a four-way valve (16 - 23) for the alternate connection of points 16 - 18, 20 - 22, 17 - 19, 21 - 23 and 16 - 22, 20 - 18, 17 - 23, 21 - 19, where the preconcentration columns (14, 15) are located between points 19 and 22, and 18 and 23, respectively, while more concentrated eluent and extra pure solvent stream are directed to points 16 and 17, and the separation column (6) is reached from points 20 and 21 via a junction (7).

7. Apparatus according to one of Claims 4 to 6, characterised in that a purification column, in particular with strong ion exchanger, is provided in each of the feed lines for eluent and extra pure solvent, especially water, upstream of the sample loading device.

8. Apparatus according to one of Claims 4 to 7, characterised by a damping membrane (11) between the eluent and extra pure solvent streams (4, 5) branching off from the two-headed loading pump (1 - 3).

**Revendications**

1. Procédé de détermination de la concentration des constituants d'un échantillon liquide par chromatographie, notamment de faibles concentrations d'ions dans des échantillons aqueux par chromatographie d'échange d'ions avec un éluant aqueux de concentration convenable, le cas échéant avec pré-enrichissement sur un adsorbant, caractérisé, en ce qu'il consiste à mélanger un éluant plus concentré à la quantité adéquate de solvant très pur, notamment à une quantité d'eau très pure, pour obtenir la concentration convenable en amont de la colonne de séparation du chromatographe à échange d'ions, la solution (aqueuse) d'échantillon étant ajoutée au courant de solvant très pur, notamment à courant d'eau très pure ou les ions contenus dans la solution de l'échantillon étant fixés d'abord sur un adsorbant élué par de l'éluant très concentré.

2. Procédé suivant la revendication 1, caractérisé, en ce qu'il consiste à utiliser, pour la fixation préalable des ions, deux petites colonnes de pré-enrichissement, ayant notamment le même garnissage que la colonne de séparation et parcourues d'un cycle d'analyse à l'autre alternativement en sens opposé, les ions du courant de solvant très pur, notamment du courant d'eau très pure, fixés dans un cycle à une colonne étant entraînés dans le cycle suivant par de l'éluant très concentré au point de mélange en amont de la colonne de séparation.

3. Procédé suivant la revendication 1 ou 2, caractérisé, en ce qu'il consiste à charger à la fois le solvant très pur et l'éluant concentré de manière adéquate, respectivement dans une colonne de purification prévue en amont.

4. Dispositif pour la mise en oeuvre du procédé suivant la revendication 1, comprenant une colonne de séparation suivie d'un détecteur, des dispositifs pour le transport réglé d'un éluant et un dispositif d'entrée de l'échantillon, caractérisé, par une pompe de chargement (1-3) à deux têtes réglée à un débit constant et destinée au transport d'éluant très concentré, d'une part, ou de solvant très pur complété par l'éluant, d'autre part, qui sont réunies juste en amont de la colonne de séparation (6), un dispositif de chargement de l'échantillon (8 et 13) étant prévu sur le trajet (4) du solvant très pur vers la colonne de séparation (6).

5. Dispositif suivant la revendication 4, caractérisé, par un couple de colonnes de pré-enrichissement (14, 15), en amont de la colonne de séparation (6), mais en aval du dispositif de chargement de l'échantillon (13), et par des moyens pour brancher en alternance les colonnes de pré-enrichissement dans le courant d'éluant et dans le courant de solvant très pur, avec inversion du sens.

6. Dispositif suivant la revendication 5, caractérisé, par une vanne à quatre voies (16-23) pour mettre alternativement en communication les points 16-18, 20-22, 17-19, 21-23 et 16-22, 20-18, 17-23, 21-19, les colonnes de pré-enrichissement (14, 15) étant disposées entre les points 19 et 22, d'une part, et 18 et 23, d'autre part, tandis que de l'éluant très concentré et un courant de solvant très pur est envoyé aux points 16 et 17 et la colonne de séparation (6) étant atteinte à partir des points 20 et 21 en passant par un conduit commun (7).

7. Dispositif suivant l'une des revendications 4 à 6, caractérisé, en ce que dans les conduits d'amenée de l'éluant et du solvant très pur, notamment de l'eau très pure, il est prévu, en amont du dispositif de chargement de l'échantillon, respectivement une colonne de purification ayant notamment un échangeur d'ions fort.

8. Dispositif suivant l'une des revendications 4 à 7, caractérisé, par une membrane d'amortissement (11) entre les courants d'éluant (4) et de solvant très pur (5), en dérivation de la pompe de chargement (1-3) à deux têtes.

FIG. 1

2x Eluent

Abfall

Probe

$H_2O$

FIG. 2

FIG. 3

FIG. 4 A

FIG. 4 B

FIG. 4 C

FIG. 4 D

0                   10   min

Chromatogramm eines kommerziellen IC-Systems

FIG. 5